# DEMANDE DE BREVET EUROPEEN

(11) **EP 4 670 587 A1**
(43) Date de publication de la demande: **31.12.2025**
(21) Numéro de dépôt: 25180284.9
(22) Date de dépôt: 02.06.2025
(51) Int. Cl.: A47J 37/08

(54) **GRILLE-PAIN AVEC SYSTEME DE DETECTION ELECTRONIQUE DE LA POSITION DU CHARIOT PORTE-PAIN**

(30) Priorité: 27.06.2024 FR 2406980
(71) Demandeur: SEB S.A., 69130 Ecully (FR)
(72) Inventeur: PETIT, Michel, 69134 ECULLY CEDEX (FR)
(74) Mandataire: SEB Développement

(57) **Abrégé**

Ce grille-pain (1) comprend :
- un chariot porte-pain (6) mobile entre une position d'éjection et une position de grillage, et propre lors de son mouvement entre la position d'éjection et la position de grillage à entrainer une pièce ferromagnétique (26) entre une position éloignée et une position rapprochée par rapport à un électroaimant (28), et
- un commutateur d'alimentation de l'électroaimant propre à être commandé par une unité de commande (42) entre un état ouvert et un état fermée d'alimentation électrique de l'électroaimant (28).
Conformément à l'invention, le grille-pain (1) comprend un organe de mesure d'une donnée relative à l'intensité du courant traversant un bobinage (30) de l'électroaimant (28) et l'unité de commande (42) est propre à déterminer la position du chariot porte-pain (6) en fonction de la donnée relative à l'intensité du courant mesurée.

## Description

### Domaine technique

La présente invention se rapporte au domaine des grille-pains comprenant des moyens de chauffage, un chariot porte-pain mobile entre une position d'éjection dans laquelle il est rappelé par un moyen élastique et une position de grillage dans laquelle il est retenu par un dispositif électromagnétique. Un tel grille-pain est propre à détecter la position du chariot porte-pain et à commander le fonctionnement des différents éléments du grille-pain en fonction de la position détectée.

### Etat de la technique

Il est notamment connu de EP1328181 B1 un grille-pain comprenant un contacteur de fin de course propre à interagir avec le chariot porte-pain lorsqu'il est en position de grillage et à réaliser ainsi une détection mécanique de la position du chariot porte-pain.

Une telle configuration permet notamment de réaliser une détection du positionnement du chariot porte-pain en position de grillage. Cela permet notamment, lorsque le chariot porte-pain est détecté en position de grillage, d'activer l'alimentation en énergie électrique du dispositif électromagnétique pour maintenir le chariot dans cette position pendant une période de chauffe prédéterminée au cours de laquelle les moyens de chauffage sont alimentés en énergie électrique.

Cependant, le grille-pain proposé dans EP1328181 B1 a une structure complexe et couteuse car la détection de la position du chariot porte-pain nécessite des éléments additionnels, notamment un contacteur et un élément mobile propre à interagir avec le contacteur, et de l'espace libre pour recevoir ces éléments et permettre leur interaction. En outre, un tel agencement présente un risque en cas de défaillance du contacteur.

### Résumé de l'invention

La présente invention vise à remédier à ces inconvénients.

Le problème technique à la base de l'invention consiste à proposer un grille-pain de structure simplifié et offrant une sécurité de fonctionnement améliorée.

A cet effet, l'invention a pour objet un grille-pain comprenant : des moyens de chauffage, un chariot porte-pain mobile entre une position d'éjection et une position de grillage, un organe de rappel du chariot porte-pain en position d'éjection, un dispositif électromagnétique de maintien du chariot porte-pain en position de grillage, le dispositif électromagnétique comprenant une pièce ferromagnétique et un électroaimant, le chariot porte-pain étant propre lors de son mouvement entre la position d'éjection et la position de grillage à entrainer la pièce ferromagnétique entre une position éloignée et une position rapprochée par rapport à l'électroaimant, un commutateur d'alimentation de l'électroaimant propre à être commandé par une unité de commande entre un état ouvert de coupure de l'alimentation électrique de l'électroaimant et un état fermé d'alimentation électrique de l'électroaimant, dans lequel le dispositif électromagnétique est propre à maintenir le chariot porte-pain en position de grillage. Conformément à l'invention, le grille-pain comprend un organe de mesure d'une donnée relative à l'intensité du courant traversant un bobinage de l'électroaimant et l'unité de commande est propre à déterminer la position du chariot porte-pain en fonction de la donnée relative à l'intensité du courant mesurée par l'organe de mesure.

Grâce à l'invention, la position du chariot porte-pain est détectée de manière simplifiée en utilisant simplement une mesure relative à l'intensité du courant traversant le bobinage et sans nécessiter un mécanisme de détection physique de la position du chariot porte-pain. Ainsi, la structure du grille-pain est simplifiée et le volume occupé par les éléments nécessaire à la fonction de détection est limité. De plus le fait de réaliser une détection électronique (via la mesure d'une donnée relative à l'intensité du courant) et non plus physique de la position du chariot porte-pain permet de réaliser la fonction de manière sécurisée sans qu'une éventuel défaillance mécanique puisse conduire à une mauvaise détection et à un dysfonctionnement dangereux pour l'utilisateur.

Selon des aspects avantageux mais non obligatoires de l'invention, un tel grille-pain incorpore une ou plusieurs des caractéristiques suivantes, prises dans toute combinaison techniquement admissible.

Selon une caractéristique avantageuse de l'invention, l'organe de mesure est un capteur de courant et l'unité de commande est configurée pour détecter que le chariot porte-pain est en position de grillage lorsque la valeur de l'intensité du courant mesurée par l'organe de mesure est inférieure à un premier seuil prédéterminé alors que le commutateur est en état fermé.

Un tel agencement permet d'assurer la détection du chariot porte-pain en position de grillage de manière fiable et robuste avec une simple mesure de courant.

Selon une caractéristique avantageuse de l'invention, l'unité de commande est configurée pour détecter que le chariot porte-pain est en position d'éjection lorsque la valeur de l'intensité du courant mesurée par l'organe de mesure est supérieure à un deuxième seuil prédéterminé, supérieur ou égal au premier seuil prédéterminé, alors que le commutateur est en état fermé.

Un tel agencement permet d'assurer la détection du chariot porte-pain en position d'éjection de manière fiable et robuste avec une simple mesure de courant.

Selon une caractéristique avantageuse de l'invention, l'unité de commande est configurée pour à intervalle régulier, commander le commutateur successivement dans l'état ouvert pendant une première durée prédéterminée puis dans l'état fermé pendant une deuxième durée prédéterminée, et l'unité de commande est configurée pour détecter que le chariot porte-pain est en position de grillage si l'intensité mesurée par l'organe de mesure pendant la deuxième durée prédéterminée est inférieure au premier seuil prédéterminé.

Un tel agencement permet de régulièrement vérifier dans quelle position est le chariot porte-pain et ainsi de commander le fonctionnement du grille-pain en fonction de la position de chariot porte-pain à chaque instant. En outre, cela permet de limiter la consommation du grille-pain tout en assurant une fonction de détection électronique de la position du chariot porte-pain

Selon une caractéristique avantageuse de l'invention, l'unité de commande est configurée pour maintenir le commutateur dans l'état fermé pendant une période de chauffe suite à la détection du passage du chariot porte-pain en position de grillage.

Un tel agencement permet d'assurer un maintien du chariot porte-pain en position de grillage pendant la période de chauffe.

Selon une caractéristique avantageuse de l'invention, l'unité de commande est configurée pour commander l'alimentation en énergie électrique des moyens de chauffage pendant la période de chauffe et pour couper l'alimentation en énergie électrique des moyens de chauffage à l'issue de la période de chauffe.

Un tel agencement permet de commander le grillage du pain positionné dans le chariot porte-pain dès que le chariot porte-pain est dans la position de grillage et d'assurer un arrêt du grillage à l'issue de la période de chauffe.

Selon une caractéristique avantageuse de l'invention, l'unité de commande est configurée pour commander le commutateur en état ouvert à l'issue de la période de chauffe.

Un tel agencement permet d'assurer un déplacement du chariot porte-pain en position d'éjection à l'issue de la période de chauffe.

Selon une caractéristique avantageuse de l'invention, l'unité de commande est configurée pour, à la suite de la commande du commutateur en état ouvert à l'issue de la période de chauffe, vérifier, en fonction de la mesure de l'intensité du courant par l'organe de mesure, que le chariot porte-pain est en position d'éjection pendant une troisième durée prédéterminée avant d'autoriser une nouvelle alimentation en énergie électrique des moyens de chauffage.

Un tel agencement permet d'éviter un fonctionnement en continu des moyens de chauffage et donc un risque de départ de feu lorsque le chariot porte-pain est bloqué en position de grillage à cause d'un dysfonctionnement.

Selon une caractéristique avantageuse de l'invention, la pièce ferromagnétique est solidaire du chariot porte-pain.

Un tel agencement permet d'implémenter simplement le dispositif électromagnétique dans le grille-pain et d'assurer un design simple et compact.

L'invention a également pour objet un procédé de commande d'un grille-pain tel que défini ci-dessus, le procédé comprenant les étapes suivantes :
- b) la commande par l'unité de commande du commutateur dans l'état fermé,
- c) la mesure d'une donnée relative à l'intensité du courant traversant le bobinage de l'électroaimant par l'organe de mesure, et
- d) la détection de la position du chariot porte-pain par l'unité de commande en fonction de la donnée relative à l'intensité du courant mesurée.

Un tel procédé permet de détecter la position du chariot porte-pain de manière simplifiée en utilisant simplement une mesure relative à l'intensité du courant traversant le bobinage et sans nécessiter un mécanisme de détection physique de la position du chariot porte-pain. Ainsi, la structure et le fonctionnement du grille-pain sont simplifiés et le volume occupé par les éléments nécessaires à la fonction de détection est limité.

Selon des aspects avantageux mais non obligatoires de l'invention, un tel procédé incorpore une ou plusieurs des caractéristiques suivantes, prises dans toute combinaison techniquement admissible.

Selon une caractéristique avantageuse de l'invention, le procédé comprend préalablement à l'étape b) de commande, l'étape suivante : a) la commande par l'unité de commande du commutateur dans l'état ouvert pendant une première durée prédéterminée, et lors de l'étape de commande b) l'unité de commande commande le commutateur dans l'état fermé pendant une deuxième durée prédéterminée.

Un tel fonctionnement permet de limiter la consommation du grille-pain tout en assurant une fonction de détection électronique de la position du chariot porte-pain.

Selon une caractéristique avantageuse de l'invention, si lors de l'étape d) de détection le chariot porte-pain est détecté en position de grillage, le procédé comprend les étapes suivantes :
- e) le maintien par l'unité de commande du commutateur dans l'état fermé pendant une période de chauffe, et
- f) la commande par l'unité de commande de l'alimentation en énergie électrique des moyens de chauffage pendant la période de chauffe.

Un tel fonctionnement permet de commander le grillage du pain positionné dans le chariot porte-pain dès que le chariot porte-pain est dans la position de grillage et d'assurer un arrêt du grillage à l'issue de la période de chauffe.

Selon une caractéristique avantageuse de l'invention, à l'issue de la période de chauffe le procédé comprend les étapes suivantes :
- g) la commande par l'unité de commande du commutateur en état ouvert, et
- h) la vérification que le chariot porte-pain est en position d'éjection pendant une troisième durée prédéterminée à la suite de l'étape g) de commande du commutateur en état ouvert.

Un tel fonctionnement permet d'assurer un déplacement du chariot porte-pain en position d'éjection à l'issue de la période de chauffe et de vérifier que le chariot porte-pain n'est pas bloqué en position de grillage à cause d'un dysfonctionnement.

Selon une caractéristique avantageuse de l'invention, lors de l'étape h) de vérification, l'unité de commande commande le commutateur en état fermé pendant la troisième durée prédéterminée, l'organe de mesure mesure la donnée relative à l'intensité du courant pendant la troisième durée prédéterminée et l'unité de commande détecte la position du chariot porte-pain en fonction de la donnée relative à l'intensité du courant mesurée.

Un tel fonctionnement permet de s'assurer de manière fiable et simple que le chariot porte-pain n'est pas bloqué en position de grillage à cause d'un dysfonctionnement.

Selon une caractéristique avantageuse de l'invention, tant que le chariot porte-pain est détecté en position de grillage lors de l'étape h) de vérification, l'unité de commande empêche une nouvelle alimentation en énergie électrique des moyens de chauffage.

Un tel fonctionnement permet d'éviter un fonctionnement en continu des moyens de chauffage et donc un risque de départ de feu lorsque le chariot porte-pain est bloqué en position de grillage à cause d'un dysfonctionnement.

### Brève description des figures

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
La figure 1 est une vue schématique en perspective d'un grille-pain conforme à l'invention comportant un chariot porte-pain mobile entre une position d'éjection et une position de grillage;
La figure 2 est une vue en coupe selon le plan de coupe vertical selon la ligne II-II du grille-pain de la figure 1 comprenant un dispositif électromagnétique de maintien du chariot porte-pain en position de grillage ;
La figure 3 est une représentation schématique en coupe du dispositif électromagnétique de la figure 2 comprenant une pièce ferromagnétique et un électroaimant, la pièce ferromagnétique étant dans une position éloignée par rapport à l'électroaimant ;
La figure 4 est une représentation analogue à la figure 3, la pièce ferromagnétique étant dans une position rapprochée par rapport à l'électroaimant ;
La figure 5 est une représentation schématique d'une unité de commande du grille-pain des figures 1 et 2 et d'un circuit d'alimentation d'un bobinage de l'électroaimant des figures 3 et 4 ;
La figure 6 est un organigramme d'un procédé de commande d'un grille-pain conforme à l'invention.

Seuls les éléments nécessaires à la compréhension de l'invention ont été représentés. Pour faciliter la lecture des dessins, les mêmes éléments portent les mêmes références d'une figure à l'autre.

On notera que dans ce document, les termes « horizontal », « vertical », « inférieur », « supérieur », « haut », « bas », « avant », « arrière », « longitudinal », « transversal », employés pour décrire le grille-pain font référence à ce dispositif en situation d'usage, notamment lorsqu'il est installé sur un plan de travail.

En outre, les termes « interne » et « externe » ou « intérieur » et extérieur » sont définis par rapport à un volume interne du grille-pain destiné à recevoir des tranches de pain à griller. Un élément ou une face interne ou intérieur est positionné en regard du volume interne tandis qu'un élément ou une face externe ou extérieur est situé en regard de l'extérieur au volume interne.

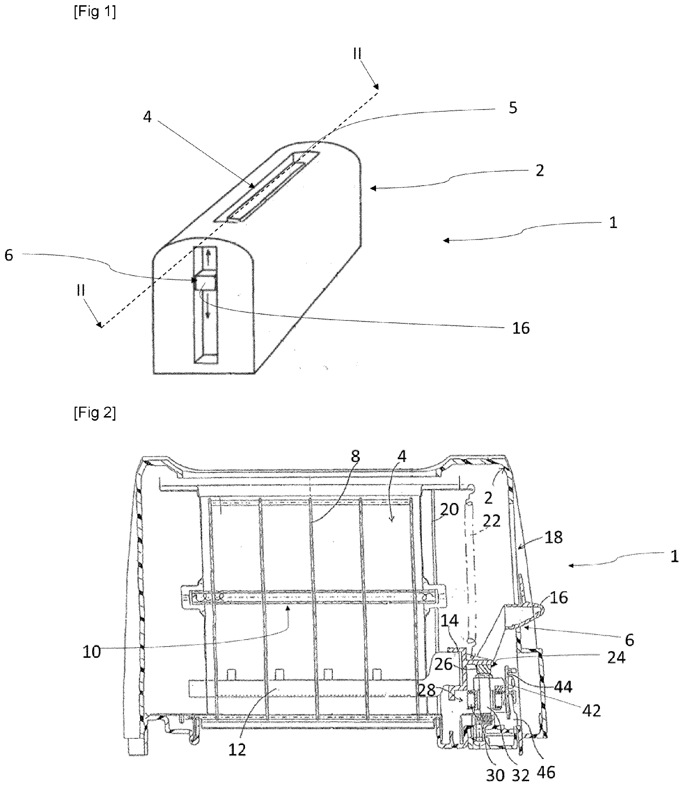

Les figures 1 et 2 représentent un grille-pain 1 qui comporte un boîtier 2 avec une enceinte de grillage 4 ouverte dans sa partie supérieure pour permettre l'introduction d'un aliment tel qu'une tranche de pain 5. Cette enceinte de grillage 4 est délimitée dans sa partie inférieure par un chariot porte-pain 6 et latéralement par deux grilles verticales 8 disposées symétriquement par rapport à un plan médian vertical du boîtier 2.

Le boîtier 2 comporte des moyens de chauffage 10 situés à proximité de l'enceinte de grillage 4. Ces moyens de chauffage 10 peuvent être réalisés par deux tubes chauffants à quartz disposés horizontalement le long des grilles verticales 8 ou par des fils résistifs.

Le chariot porte-pain 6 comprend une traverse horizontale 12, prolongée par un entraîneur 14 et une poignée 16 sortant du boîtier 2 par une ouverture verticale 18. Le chariot porte-pain 6 est monté mobile, de préférence verticalement, entre une position haute dite d'éjection et une position basse, dite de grillage, correspondant à la situation de la figure 2.

Le mouvement vertical du chariot porte-pain 6 est par exemple guidé par une glissière 20.

Un organe de rappel 22 également appelé moyen de rappel élastique 22, tel qu'un ressort, maintient le chariot porte-pain 6 en position d'éjection et permet à un utilisateur d'abaisser le chariot en position de grillage en exerçant une pression sur la poignée 16.

En position de grillage, le chariot porte-pain 6 est retenu par un dispositif électromagnétique 24 qui comprend, d'une part, une pièce ferromagnétique 26 fixée au chariot porte-pain 6, et d'autre part, un électroaimant 28 fixé au boîtier 2 du grille-pain 1.

Avantageusement, la pièce ferromagnétique 26 est solidaire du chariot porte-pain 6.

Le chariot porte-pain 6 est propre lors de son mouvement entre la position d'éjection et la position de grillage à entrainer la pièce ferromagnétique 26 entre une position éloignée et une position rapprochée par rapport à l'électroaimant 28.

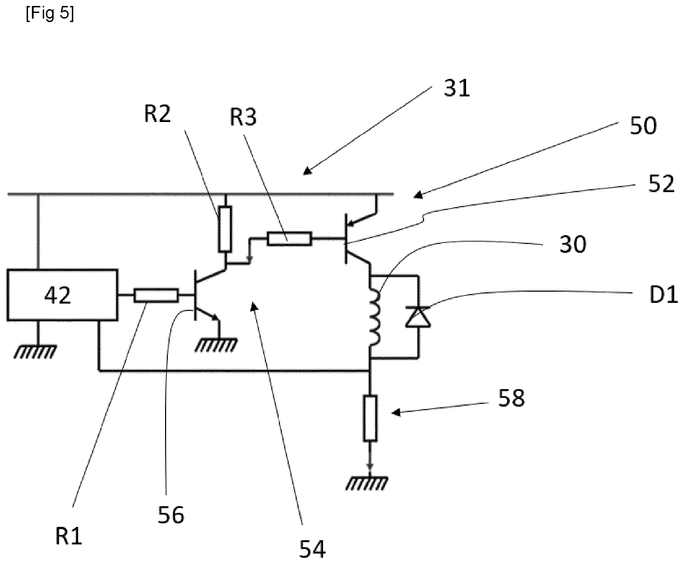

L'électroaimant 28 comporte de manière bien connue, un bobinage 30, également appelé bobine électrique 30, relié à un circuit d'alimentation 31, visible à la figure 5.

L'électroaimant 28 comprend également un noyau ferromagnétique 32 qui permet d'intensifier le champ magnétique créé par le bobinage 30.

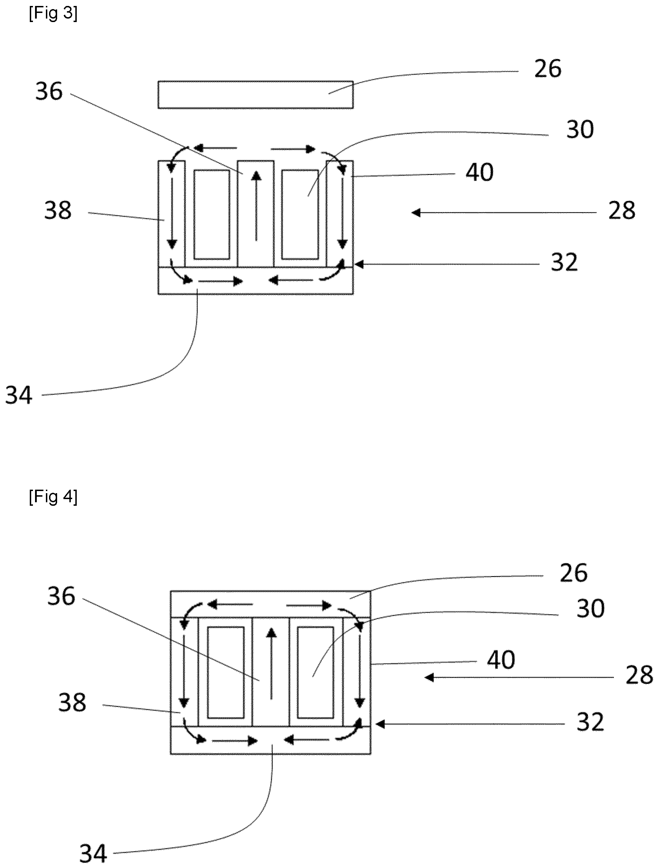

Avantageusement, le noyau ferromagnétique 32 comprend, comme représenté aux figures 3 et 4, une base 34, une barre centrale 36 et deux barres latérales 38, 40 situées de part et d'autre de la barre centrale 36.

Les barres centrale 36 et latérales 38, 40 sont fixées à la base 34 au niveau d'une extrémité inférieure desdites barres 36, 38, 40.

Le bobinage 30 est avantageusement positionné autour de la barre centrale 36 dans un logement délimité par les barres latérales 38, 40, la base 34 et la barre centrale 36.

Avantageusement, en position rapprochée, la pièce ferromagnétique 26 vient au contact d'une extrémité supérieure des barres centrale 36 et latérales 38, 40.

Plus généralement, lorsque la pièce ferromagnétique 26 est en position rapprochée par rapport à l'électroaimant 28, un champ magnétique généré par le passage d'un courant dans la bobine électrique 30 est propre à circuler au travers du noyau ferromagnétique 32 en passant par la pièce ferromagnétique 26, comme représenté par les flèches à la figure 4. Lorsque la pièce ferromagnétique 26 est en position éloignée par rapport à l'électroaimant 28, un champ magnétique généré par le passage d'un courant dans la bobine électrique 30 est propre à circuler au travers du noyau ferromagnétique 32 en passant par l'air situé entre la barre centrale 36 et les barres latérales 38, 40 comme représenté par les flèches sur la figure 3. En d'autres termes, lorsque la pièce ferromagnétique 26 est en position rapprochée, le courant dans la bobine électrique 30 diminue (par rapport à lorsque la pièce ferromagnétique 26 est en position éloignée) car l'impédance du circuit magnétique formé par la pièce ferromagnétique 26 et l'électroaimant 28 augmente à cause du rapprochement de la pièce ferromagnétique 26 par rapport au noyau ferromagnétique 32. Lorsque la pièce ferromagnétique 26 est en position éloignée, le courant dans la bobine électrique 30 augmente (par rapport à lorsque la pièce ferromagnétique 26 est en position rapprochée) car l'impédance du circuit magnétique diminue à cause de l'éloignement de la pièce ferromagnétique 26 par rapport au noyau ferromagnétique 32.

Le grille-pain 1 comporte une unité de commande 42 propre à commander le fonctionnement des moyens de chauffage 10 et de l'électroaimant 28.

L'unité de commande 42 est représentée à la figure 5 et est propre à agir sur le circuit d'alimentation 31 pour commander le fonctionnement de l'électroaimant 28 et notamment le maintien ou non de la pièce ferromagnétique 26 en position rapprochée et donc du chariot porte-pain 6 en position de grillage.

L'unité de commande 42 et le circuit d'alimentation 31 du bobinage 30 sont réalisés sur un circuit imprimé 44 monté sur un support 46 à proximité de l'électroaimant 28, visibles à la figure 2.

L'unité de commande 42 est configurée pour commander un commutateur 50 d'alimentation de l'électroaimant 28 et notamment du bobinage 30 entre un état ouvert de coupure de l'alimentation électrique de l'électroaimant 28, c'est-à-dire du bobinage 30, dans lequel l'électroaimant est inapte à maintenir la pièce ferromagnétique 26 en position rapprochée et un état fermé d'alimentation électrique de l'électroaimant 28, c'est-à-dire du bobinage 30, dans lequel l'électroaimant 28 est apte à maintenir la pièce ferromagnétique 26 en position rapprochée et donc à maintenir le chariot porte-pain 6 en position de grillage.

Comme représenté à la figure 5, le commutateur 50 comprend par exemple un transistor bipolaire 52 et une électronique de commande 54 connectée à une base du transistor bipolaire 52.

L'électronique de commande 54 comprend par exemple trois résistances électriques R1, R2, R3 et un transistor bipolaire additionnel 56 dont la base est reliée à l'unité de commande 42.

Le grille-pain 1 et notamment le circuit d'alimentation 31 comprend un organe de mesure 58 d'une donnée relative à l'intensité du courant traversant la bobine électrique 30. L'organe de mesure 58 est par exemple un capteur de courant propre à mesurer le courant traversant le bobinage 30. L'organe de mesure 58 comprend par exemple une résistance de shunt reliée électriquement à l'unité de commande 42 et au bobinage 30. La résistance de shunt a par exemple une valeur de 10 ohms.

Avantageusement le circuit d'alimentation 31 comprend une diode D1 en parallèle du bobinage 30.

Le grille-pain 1 comprend également avantageusement une prise électrique, non représentée, via laquelle l'unité de commande 42, le circuit d'alimentation 31 et les moyens de chauffage 10 sont propres à être alimentés en énergie électrique.

Avantageusement, l'unité de commande 42 est configurée pour être continuellement alimentée en énergie électrique via la prise électrique.

L'unité de commande 42 est propre à déterminer la position de la pièce ferromagnétique 26 et donc du chariot porte-pain 6 en fonction de la donnée relative à l'intensité du courant mesurée par l'organe de mesure 58.

L'unité de commande 42 est configurée pour détecter que le chariot porte-pain 6 est en position de grillage lorsque la valeur de l'intensité du courant mesurée par l'organe de mesure 58 est inférieure à un premier seuil prédéterminé alors que le commutateur 50 est en état fermé, c'est-à-dire que la bobine électrique 30 est alimenté en courant.

Le premier seuil prédéterminé est par exemple de l'ordre de 40mA, de préférence compris entre 25mA et 35 mA, la résistance interne de la bobine étant de l'ordre de 200 Ohms et la tension d'alimentation du circuit d'alimentation 31 étant de l'ordre de 12 volts.

Lorsque le commutateur 50 est en état fermé, la tension appliquées aux bornes du bobinage 30 est par exemple sensiblement égale à la tension d'alimentation du circuit d'alimentation 31 et le bobinage est connecté, via le commutateur 50 à une borne dont le potentiel est sensiblement égal à la tension d'alimentation du circuit d'alimentation 31. Lorsque le commutateur 50 est en état ouvert la tension appliquée aux bornes du bobinage 30 tend par exemple vers 0 volts.

L'unité de commande 42 est également configurée pour détecter que le chariot porte-pain 6 est en position d'éjection lorsque la valeur de l'intensité du courant mesurée par l'organe de mesure 58 est supérieure à un deuxième seuil prédéterminé, supérieur ou égal au premier seuil prédéterminé, alors que le commutateur est en état fermé.

Le deuxième seuil prédéterminé est par exemple supérieur à 40 mA de préférence compris entre 40mA et 50 mA.

L'unité de commande 42 est configurée pour à intervalle régulier, commander le commutateur 50 successivement dans l'état ouvert pendant une première durée prédéterminée puis dans l'état fermé pendant une deuxième durée prédéterminée.

On entend par intervalle régulier par exemple toute les 0,1 seconde et la première durée prédéterminée est par exemple de l'ordre de 95 ms et la deuxième durée prédéterminée est par exemple de l'ordre de 5ms.

Au cours de chaque deuxième durée prédéterminée et de préférence à l'issue de chaque deuxième durée prédéterminée, l'unité de commande 42 est configurée pour mesurer l'intensité du courant traversant la bobine électrique 30 et détecter la position du chariot porte-pain 6 en fonction de ladite mesure.

Au cours de chaque deuxième durée prédéterminée et de préférence à l'issue de chaque deuxième durée prédéterminée, l'unité de commande 42 est notamment configurée pour détecter que le chariot porte-pain 6 est passé en position de grillage si l'intensité mesurée par l'organe de mesure 58 est inférieure au premier seuil prédéterminé.

De plus, l'unité de commande 42 est configurée pour maintenir le commutateur 50 dans l'état fermé pendant une période de chauffe suite à la détection du passage du chariot porte-pain 6 en position de grillage.

L'unité de commande 42 est également configurée pour commander l'alimentation en énergie électrique des moyens de chauffage 10 pendant la période de chauffe et pour couper l'alimentation en énergie électrique des moyens de chauffage à l'issue de la période de chauffe.

La période de chauffe est par exemple fonction du positionnement d'un bouton de réglage du temps de chauffe, non représenté, positionné sur l'extérieur du boîtier 2.

L'unité de commande 42 est configurée pour commander le commutateur 50 en état ouvert à l'issue de la période de chauffe.

Avantageusement encore, l'unité de commande 42 est configurée pour, à la suite de la commande du commutateur en état ouvert à l'issue de la période de chauffe, vérifier, en fonction de la mesure de l'intensité du courant par l'organe de mesure 58, que le chariot porte-pain 6 est en position d'éjection pendant une troisième durée prédéterminée avant d'autoriser une nouvelle alimentation en énergie électrique des moyens de chauffage 10.

La troisième durée prédéterminée est par exemple de l'ordre de 1 seconde.

L'unité de commande 42 comprend par exemple un processeur et une mémoire comprenant des instructions logicielles de programmation propres à être exécutées par le processeur et à mettre en œuvre les différentes étapes de fonctionnement du grille-pain 1 selon l'invention présentées ci-après.

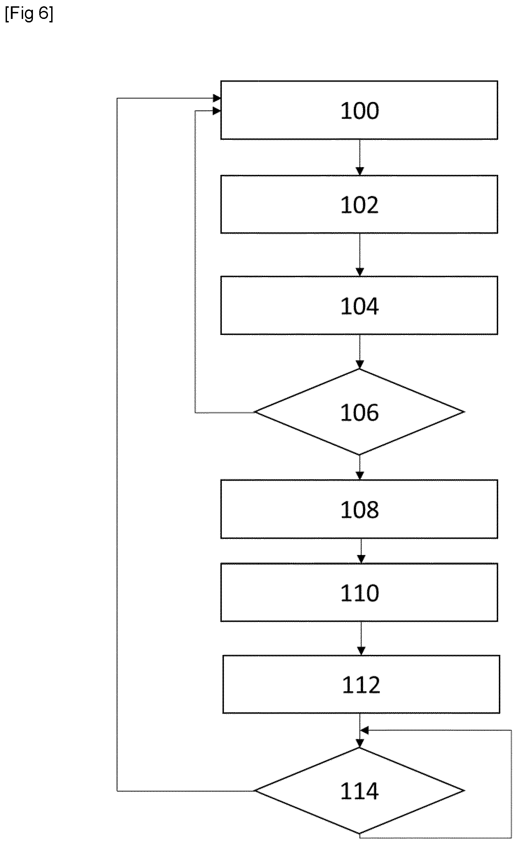

Un exemple de fonctionnement du grille-pain 1 selon l'invention sera expliqué plus en détail ci-après à l'appui de l'organigramme de la figure 6.

Lors d'une première étape 100, l'unité de commande 42 commande le commutateur 50 dans l'état ouvert pendant la première durée prédéterminée.

Au cours d'une étape suivante 102, l'unité de commande 42 commande le commutateur 50 dans l'état fermé pendant la deuxième durée prédéterminée.

A l'issue ou au cours de la deuxième durée prédéterminée, le procédé comprend une étape de mesure 104, par l'unité de commande 42, à l'aide de l'organe de mesure 58, de la donnée relative à l'intensité du courant traversant le bobinage 30 de l'électroaimant 28. L'organe de mesure 58 mesure par exemple l'intensité du courant traversant le bobinage 30.

Lors d'une étape suivante de détection 106, l'unité de commande 42 détecte la position du chariot porte-pain 6 en fonction de la donnée relative à l'intensité du courant mesurée à l'étape de mesure 104.

Lors de l'étape de détection 106, si la valeur de l'intensité du courant mesurée par l'organe de mesure 58 à l'étape de mesure 104 est supérieure au deuxième seuil prédéterminé alors le chariot porte-pain 6 est détecté en position d'éjection. Les étapes 100, 102, 104 et 106 sont alors répétées comme visible à la figure 6.

Lors de l'étape de détection 106, si la valeur de l'intensité du courant mesurée par l'organe de mesure 58 à l'étape de mesure 104 est inférieure au premier seuil prédéterminé alors le chariot porte-pain 6 est détecté en position de grillage. Le procédé comprend alors une étape 108 de maintien par l'unité de commande 42 du commutateur 50 dans l'état fermé pendant la période de chauffe et une étape 110 de commande par l'unité de commande 42 de l'alimentation en énergie électrique des moyens de chauffage 10 pendant la période de chauffe.

A l'issue de la période de chauffe, le procédé comprend une étape 112 de commande par l'unité de commande 42 du commutateur 50 en état ouvert. Le chariot porte-pain 6 n'est alors plus maintenu en position de grillage par l'électroaimant 28 et est déplacé en position d'éjection par le moyen de rappel élastique 22.

Suite à l'étape 112, le procédé comprend une étape 114 de vérification par l'unité de commande 42 que le chariot porte-pain 6 est en position d'éjection pendant la troisième durée prédéterminée à la suite de l'étape 112.

Lors de l'étape de vérification 114, l'unité de commande 42 commande le commutateur 50 en état fermé pendant la troisième durée prédéterminée, tandis l'organe de mesure 58 mesure une donnée relative à l'intensité du courant pendant la troisième durée prédéterminée. L'unité de commande 42 détecte alors la position du chariot porte-pain 6 en fonction de l'intensité du courant mesurée.

Avantageusement lors de l'étape de vérification 114, l'organe de mesure 58 mesure l'intensité du courant à intervalle régulier et l'unité de commande calcule la moyenne de l'intensité de courant mesurée pendant la troisième durée prédéterminée. Si la moyenne calculée est inférieure au premier seuil prédéterminé alors le chariot porte-pain est détecté comme bloqué en position de grillage et l'unité de commande 42 empêche une nouvelle alimentation en énergie électrique des moyens de chauffage. L'étape de vérification 114 est alors répétée.

En d'autres termes, tant que le chariot porte-pain est détecté en position de grillage lors de l'étape 114 de vérification, l'unité de commande 42 empêche une nouvelle alimentation en énergie électrique des moyens de chauffage 10.

Si lors de l'étape de vérification 114, la moyenne calculée est supérieure au deuxième seuil prédéterminé, le chariot porte-pain 6 est détecté en position d'éjection. Les étapes 100, 102, 104 et 106 sont alors répétées comme visible à la figure 6.

Le procédé selon l'invention permet d'obtenir un fonctionnement optimisé du grille-pain avec un coût réduit et une sécurité améliorée. De plus il offre une détection de la position du chariot porte-pain 6 simple réalisée de manière essentiellement software.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

## Revendications

1. Grille-pain (1) comprenant :
- des moyens de chauffage (10),
- un chariot porte-pain (6) mobile entre une position d'éjection et une position de grillage,
- un organe de rappel (22) du chariot porte-pain (6) en position d'éjection,
- un dispositif électromagnétique (24) de maintien du chariot porte-pain (6) en position de grillage, le dispositif électromagnétique (24) comprenant une pièce ferromagnétique (26) et un électroaimant (28), le chariot porte-pain (6) étant propre lors de son mouvement entre la position d'éjection et la position de grillage à entrainer la pièce ferromagnétique (26) entre une position éloignée et une position rapprochée par rapport à l'électroaimant (28),
- un commutateur (50) d'alimentation de l'électroaimant propre à être commandé par une unité de commande (42) entre un état ouvert de coupure de l'alimentation électrique de l'électroaimant (28) et un état fermé d'alimentation électrique de l'électroaimant (28), dans lequel le dispositif électromagnétique (24) est propre à maintenir le chariot porte-pain (6) en position de grillage,
**caractérisé en ce que** le grille-pain (1) comprend un organe de mesure (58) d'une donnée relative à l'intensité du courant traversant un bobinage (30) de l'électroaimant (28) et **en ce que** l'unité de commande (42) est propre à déterminer la position du chariot porte-pain (6) en fonction de la donnée relative à l'intensité du courant mesurée par l'organe de mesure (58).

2. Grille-pain (1) selon la revendication 1, **caractérisé en ce que** l'organe de mesure (58) est un capteur de courant et **en ce que** l'unité de commande (42) est configurée pour détecter que le chariot porte-pain (6) est en position de grillage lorsque la valeur de l'intensité du courant mesurée par l'organe de mesure (58) est inférieure à un premier seuil prédéterminé alors que le commutateur (50) est en état fermé.

3. Grille-pain (1) selon la revendication 2, **caractérisé en ce que** l'unité de commande (42) est configurée pour détecter que le chariot porte-pain (6) est en position d'éjection lorsque la valeur de l'intensité du courant mesurée par l'organe de mesure (58) est supérieure à un deuxième seuil prédéterminé, supérieur ou égal au premier seuil prédéterminé, alors que le commutateur (50) est en état fermé.

4. Grille-pain (1) selon la revendication 2 ou 3, **caractérisé en ce que** l'unité de commande (42) est configurée pour à intervalle régulier, commander le commutateur (50) successivement dans l'état ouvert pendant une première durée prédéterminée puis dans l'état fermé pendant une deuxième durée prédéterminée, et **en ce que** l'unité de commande (42) est configurée pour détecter que le chariot porte-pain (6) est en position de grillage si l'intensité mesurée par l'organe de mesure (58) pendant la deuxième durée prédéterminée est inférieure au premier seuil prédéterminé.

5. Grille-pain (1) selon la revendication 4, **caractérisé en ce que** l'unité de commande (42) est configurée pour maintenir le commutateur (50) dans l'état fermé pendant une période de chauffe suite à la détection du passage du chariot porte-pain (6) en position de grillage.

6. Grille-pain (1) selon la revendication 5, **caractérisé en ce que** l'unité de commande (42) est configurée pour commander l'alimentation en énergie électrique des moyens de chauffage (10) pendant la période de chauffe et pour couper l'alimentation en énergie électrique des moyens de chauffage (10) à l'issue de la période de chauffe.

7. Grille-pain (1) selon la revendication 5 ou 6, **caractérisé en ce que** l'unité de commande (42) est configurée pour commander le commutateur (50) en état ouvert à l'issue de la période de chauffe.

8. Grille-pain (1) selon les revendications 6 et 7, **caractérisé en ce que** l'unité de commande est configurée pour, à la suite de la commande du commutateur (50) en état ouvert à l'issue de la période de chauffe, vérifier, en fonction de la mesure de l'intensité du courant par l'organe de mesure (58), que le chariot porte-pain (6) est en position d'éjection pendant une troisième durée prédéterminée avant d'autoriser une nouvelle alimentation en énergie électrique des moyens de chauffage (10).

9. Grille-pain (1) selon l'une quelconque des revendications précédentes, **caractérisé en ce que** la pièce ferromagnétique (26) est solidaire du chariot porte-pain (6).

10. Procédé de commande d'un grille-pain (1) selon l'une quelconque des revendications précédentes, **caractérisé en ce que** le procédé comprend les étapes suivantes :
- b) la commande (102) par l'unité de commande (42) du commutateur (50) dans l'état fermé,
- c) la mesure (104) d'une donnée relative à l'intensité du courant traversant le bobinage (30) de l'électroaimant (28) par l'organe de mesure (58), et
- d) la détection (106) de la position du chariot porte-pain (6) par l'unité de commande (42) en fonction de la donnée relative à l'intensité du courant mesurée.

11. Procédé de commande selon la revendication précédente, **caractérisé en ce que** le procédé comprend préalablement à l'étape b) de commande (102), l'étape suivante : a) la commande (100) par l'unité de commande (42) du commutateur (50) dans l'état ouvert pendant une première durée prédéterminée, et **en ce que** lors de l'étape de commande b) (102) l'unité de commande (42) commande le commutateur dans l'état fermé pendant une deuxième durée prédéterminée.

12. Procédé de commande selon la revendication 10 ou 11, **caractérisé en ce que** si lors de l'étape d) de détection (106) le chariot porte-pain (6) est détecté en position de grillage, le procédé comprend les étapes suivantes :
- e) le maintien (108) par l'unité de commande (42) du commutateur (50) dans l'état fermé pendant une période de chauffe, et
- f) la commande (110) par l'unité de commande (42) de l'alimentation en énergie électrique des moyens de chauffage (10) pendant la période de chauffe.

13. Procédé de commande selon la revendication précédente, **caractérisé en ce que** à l'issue de la période de chauffe le procédé comprend les étapes suivantes :
- g) la commande (112) par l'unité de commande (42) du commutateur (50) en état ouvert, et
- h) la vérification (114) que le chariot porte-pain (6) est en position d'éjection pendant une troisième durée prédéterminée à la suite de l'étape g) de commande (112) du commutateur en état ouvert.

14. Procédé de commande selon la revendication précédente, **caractérisé en ce que** lors de l'étape h) de vérification (114), l'unité de commande (42) commande le commutateur (50) en état fermé pendant la troisième durée prédéterminée, l'organe de mesure (58) mesure la donnée relative à l'intensité du courant pendant la troisième durée prédéterminée et l'unité de commande (42) détecte la position du chariot porte-pain (6) en fonction de la donnée relative à l'intensité du courant mesurée.

15. Procédé de commande selon la revendication 13 ou 14, **caractérisé en ce que** tant que le chariot porte-pain (6) est détecté en position de grillage lors de l'étape h) de vérification (114), l'unité de commande (42) empêche une nouvelle alimentation en énergie électrique des moyens de chauffage (10).
